# EUROPÄISCHE PATENTANMELDUNG

(11) **EP 4 431 266 A1**
(43) Veröffentlichungstag der Anmeldung: **18.09.2024**
(21) Anmeldenummer: 23161451.2
(22) Anmeldetag: 13.03.2023
(51) Int. Cl.: B29C 65/36, B29C 65/00, B29L 31/30

(54) **INDUKTIONSSCHWEISSVERFAHREN UND VORRICHTUNG ZUM INDUKTIVEN SCHWEISSEN**

(71) Anmelder: FACC AG, 4910 Ried im Innkreis (AT)
(72) Erfinder: ADAM, Rene Christian, 4910 Ried im Innkreis (AT); BECKER, Stephan, 4910 Ried im Innkreis (AT)
(74) Vertreter: SONN Patentanwälte GmbH & Co KG

(57) **Zusammenfassung**

Induktionsschweißverfahren zum Fügen von Fügeteilen (11, 12) mit den folgenden Schritten:
Anordnen eines ersten Fügeteils (11) und eines zweiten Fügeteils (12);
Induktives Vorwärmen einer Fügestelle (17) des ersten (11) und des zweiten Fügeteils (12) von einer Ausgangstemperatur (T_{A}) auf eine Vorwärmtemperatur (T_{V}) unterhalb einer vorgegebenen Schweißtemperatur (T_{S}) mit Hilfe eines ersten Induktors (3), wobei die Differenz zwischen der Vorwärmtemperatur (T_{V}) und der Schweißtemperatur (T_{S}) geringer ist als die Differenz zwischen der Ausgangstemperatur (T_{A}) und der Vorwärmtemperatur (T_{V});
Ermitteln zumindest eines Prozessparameters, welcher erforderlich ist, um die vorgewärmte Fügestelle (17) des ersten (11) und zweiten Fügeteils (12) auf die Schweißtemperatur (T_{S}) zu erwärmen;
Induktives Erwärmen der Fügestelle (17) des ersten (11) und zweiten Fügeteils (12) auf die Schweißtemperatur unter Verwendung des zumindest einen Prozessparameters mit Hilfe des ersten Induktors (3) oder mit Hilfe eines von dem ersten Induktor verschiedenen zweiten Induktors (4); und
Verschweißen des ersten Fügeteils (3) mit dem zweiten Fügeteil (4) an der Fügestelle (17).

## Beschreibung

Die Erfindung betrifft ein Induktionsschweißverfahren zum Fügen von Fügeteilen, vorzugsweise von Faser-Kunststoff-Verbund-(FKV)-Fügeteilen, insbesondere von FKV-Fügeteilen für ein Bauteil eines Flugzeugs.

Des Weiteren betrifft die Erfindung eine Vorrichtung zum induktiven Schweißen von Fügeteilen, vorzugsweise von Faser-Kunststoff-Verbund-(FKV)-Fügeteilen, insbesondere von FKV-Fügeteilen für ein Bauteil eines Flugzeugs.

Mit Induktionsschweißverfahren können elektrisch leitfähige und/oder magnetische Fügeteile stoffschlüssig miteinander verbunden werden. Bei Induktionsschweißverfahren von elektrisch leitfähigen Fügeteilen werden mit Hilfe von magnetischen Wechselfeldern, die von Induktoren erzeugt werden, Wirbelströme in den zu verschweißenden Fügeteilen induziert. Diese Wirbelströme werden infolge elektrischer Verluste dissipiert, sodass die Fügeteile bis zu einer Schweißtemperatur erwärmt werden können. Bei magnetischen Fügeteilen kommt es bis zum Erreichen der Curie-Temperatur aufgrund des magnetischen Wechselfelds zu magnetischen Hystereseverlusten in den Fügeteilen. Diese Hytereseverluste führen ebenfalls zu einer intrinsischen Erwärmung der Fügeteile. Da die Erwärmung kontaktlos und intrinsisch erfolgt, kann während der gesamten Erwärmung der für das Verschweißen notwendige Fügedruck aufgebracht werden. Durch das Erwärmen, das Aufbringen eines Fügedrucks und das anschließende Abkühlen, entsteht eine dauerhafte Verbindung zwischen den Fügeteilen.

Im Unterschied zu den meisten kraftschlüssigen und formschlüssigen Verbindungsmethoden, wie zum Beispiel Verbindungen von Fügeteilen mittels Schrauben, Nieten oder Bolzen, bleiben bei Induktionsschweißverfahren vorteilhafterweise die Integrität des Materials und die Beanspruchbarkeit der Fügeteile besser erhalten und werden nicht durch Bohrungen oder dergleichen negativ beeinflusst. Darüber hinaus ergeben sich bei mechanischen Fügeverfahren durch die meist punktuelle Krafteinleitung an den Verbindungsstellen ausgeprägte Spannungskonzentrationen, die insbesondere bei dünnwandigen Fügeteilen später bei Belastungen zu Problemen führen können.

Deshalb werden Induktionsschweißverfahren häufig in Bereichen eingesetzt, in denen eine hohe Beanspruchbarkeit der verbundenen Fügeteile besonders wichtig ist, wie im Luft- und Raumfahrtbereich. Aufgrund ihrer hervorragenden physikalischen Eigenschaften in Relation zu ihrer geringen Dichte werden in der Luft- und Raumfahrt häufig Bauteile aus Faser-Kunststoff-Verbund-Materialien (kurz: FKV-Material) verwendet.

Aus der EP 3 802 072 B1 ist ein Induktionsschweißverfahren bekannt, bei dem mit einem Mess-Induktor ein schwaches elektromagnetisches Feld mit einer geringen Feldstärke erzeugt wird, um Wirbelströme in einem FKV-Fügeteil zu induzieren. Die vom Mess-Induktor erzeugten Wirbelströme sollen das FKV-Fügeteil nur geringfügig erwärmen. Mit einer Messspule des Mess-Induktors wird ein elektromagnetisches Feld der induzierten Wirbelströme gemessen und auf dessen Basis eine Diskrepanz zwischen der Feldstärke des gemessenen elektromagnetischen Feldes und einer zum Aufschmelzen notwendigen Feldstärke bestimmt. Anschließend wird ein starkes elektromagnetisches Feld mit hoher Feldstärke erzeugt, das die zuvor bestimmte Diskrepanz berücksichtigt und das FKV-Fügeteil aufschmilzt.

In der EP 3 802 072 B1 wird jedoch nicht offenbart, wie die zum Aufschmelzen notwendige Feldstärke des FKV-Teils ermittelt wird. Ein Nachteil des Induktionsschweißverfahren der EP 3 802 072 B1 ist zudem, dass lokale Inhomogenitäten, die tiefer in den FKV-Fügeteilen liegen, oder Abweichungen in den Materialeigenschaften nicht berücksichtigt werden können. Es wäre jedoch wünschenswert, das elektromagnetische Feld zum Aufschmelzen des Materials exakter an die tatsächlichen Eigenschaften FKV-Fügeteile anpassen zu können, um eine gleichbleibende Schweißqualität zu erzielen. Des Weiteren ist bei dem in EP 3 802 072 B1 offenbarten Verfahren die Steuerung bzw. Regelung des Verfahrens unpräzise und anfällig für Überschwingungen.

Im Lichte dieser Ausführungen ist es Aufgabe der vorliegenden Erfindung, die Nachteile des Standes der Technik zu beseitigen oder zumindest zu lindern. Vorzugsweise ist es Aufgabe der vorliegenden Erfindung, ein Induktionsschweißverfahren und eine Vorrichtung zum induktiven Schweißen zur Verfügung zu stellen, mit denen Abweichungen in den lokalen Materialeigenschaften, Inhomogenitäten, transiente Effekte, wie sie beispielsweise am Anfang und am Ende einer Schweißnaht auftreten, und Änderungen der Fügeteilgeometrie, wie beispielsweise die Fügeteildicke, besser berücksichtigt werden können. Vorzugsweise soll mit Hilfe der Erfindung ebenfalls der in Dickenrichtung der Fügeteile vorliegende Temperaturgradient adaptiert werden. Zusätzlich soll durch die Erfindung vorzugsweise die Prozessgeschwindigkeit gesteigert werden.

Gelöst wird diese Aufgabe durch ein Induktionsschweißverfahren nach Anspruch 1 und eine Vorrichtung zum induktiven Schweißen nach Anspruch 13.

Erfindungsgemäß sind bei einem Induktionsschweißverfahren der eingangs erwähnten Art die folgenden Schritte vorgesehen:
Anordnen eines ersten Fügeteils und eines zweiten Fügeteils;
Induktives Vorwärmen einer Fügestelle des ersten und des zweiten Fügeteils von einer Ausgangstemperatur auf eine Vorwärmtemperatur unterhalb einer vorgegebenen Schweißtemperatur mit Hilfe eines ersten Induktors, wobei die Differenz zwischen der Vorwärmtemperatur und der Schweißtemperatur geringer ist als die Differenz zwischen der Ausgangstemperatur und der Vorwärmtemperatur;
Ermitteln zumindest eines Prozessparameters, insbesondere eines Induktionsgeneratoreinstellparameters, welcher erforderlich ist, um die vorgewärmte Fügestelle des ersten und zweiten Fügeteils auf die Schweißtemperatur zu erwärmen;
Induktives Erwärmen der Fügestelle des ersten und zweiten Fügeteils auf die Schweißtemperatur unter Verwendung des zumindest einen Prozessparameters mit Hilfe des ersten Induktors oder mit Hilfe eines von dem ersten Induktor verschiedenen zweiten Induktors; und
Verschweißen des ersten Fügeteils mit dem zweiten Fügeteil an der Fügestelle.

Durch das erfindungsgemäße Verfahren wird eine Fügestelle des ersten und zweiten Fügeteils auf eine Vorwärmtemperatur erwärmt, die näher an der vorgegebenen Schweißtemperatur liegt als an der Ausgangstemperatur. Dadurch wird die Fügestelle bereits vor dem Verschweißen auf eine vergleichsweise hohe Temperatur gebracht, sodass Abweichungen in den Materialeigenschaften und Inhomogenitäten, die erst bei höheren Temperaturen auftreten bzw. sichtbar werden oder tiefer in einem Fügeteil liegen, besser erkannt werden können. Aufgrund der Vorwärmung des ersten und/oder zweiten Fügeteils an der Fügestelle auf eine Vorwärmtemperatur, die näher an der Schweißtemperatur als an der Ausgangstemperatur liegt, kann darüber hinaus die Genauigkeit einer Regelung oder Steuerung des Induktionsschweißverfahrens erhöht werden, weil die Fügestelle nur noch von der vergleichsweise hohen Vorwärmtemperatur auf die Schweißtemperatur gebracht werden muss. Damit wird auch das Risiko eines Überschwingens der Regelung bzw. Steuerung verringert. Die Schweißtemperatur wird bei dem erfindungsgemäßen Verfahren vorgegeben und ist jene Temperatur an der Fügestelle, bei der die Fügeteile miteinander verschweißt werden können. Die Schweißtemperatur ist insbesondere jene materialabhängige Temperatur, bei der die Fügeteile an der Fügestelle in einen viskosen Zustand übergehen und dadurch miteinander stoffschlüssig verbunden werden können. Die polymere Matrix der Fügeteile wird auf die Schweißtemperatur erwärmt, sodass sowohl die amorphen als auch bei teilkristallinen Polymeren die kristallinen Anteile aufschmelzen und eine Polymerschmelze entsteht. Die Viskosität der Polymerschmelze muss ausreichend niedrig sein, damit die Oberflächen der Fügeteile sich insbesondere unter Aufbringen eines Fügedrucks angleichen können und sich eine Grenzfläche bildet. Die Polymerketten können dann über die Grenzfläche diffundieren, wodurch sich die Grenzfläche kontinuierlich auflöst. Die Bewegungsfreiheit der Polymerketten steigt mit Zunahme der Temperatur. Bei teilkristallinen-thermoplastischen Fügeteilen liegt die Schweißtemperatur oberhalb der Schmelztemperatur, vorzugsweise zumindest 20 K, zumindest 35 K, zumindest 50 K, zumindest 70 K oder zumindest 100 K oberhalb der Schmelztemperatur. Bei amorph-thermoplastischen Fügeteilen liegt die Schweißtemperatur oberhalb der Glasübergangstemperatur, beispielsweise zumindest 80 K oder zumindest 90 K oberhalb der Glasübergangstemperatur. Bei dem ersten und/oder zweiten Fügeteil handelt es sich bevorzugt um ein FKV-Fügeteil (FKV: Faser-Kunststoff-Verbund), das zumindest teilweise aus einem FKV-Material besteht. Ein FKV-Material weist lose oder zu Geweben verarbeitete und mit Harz oder einem anderen Verbindungsmittel verbundene Fasern auf. Das Verbindungsmittel kann insbesondere ein thermoplastisches Material sein. Das FKV-Material kann beispielsweise ein glasfaserverstärkter Kunststoff (GFK) oder ein kohlenstofffaserverstärkter Kunststoff (CFK) sein. Auch stahlfaserverstärkte Kunststoffe sind einsetzbar. Wenn das FKV-Material ein GFK ist, dann ist es vorteilhaft, wenn an der Fügestelle ein oder mehrere elektrisch leitfähige Elemente, insbesondere ein Suszeptor, angeordnet sind. Beispiele für Materialien der Fügeteile sind faserverstärkte Kunststoffe, beispielsweise kohlenstofffaserverstärkte, glasfaserverstärkte und/oder stahlfaserverstärkte Kunststoffe, mit einer Matrix aus Polyamid (PA), Polypropylen (PP), Polyethylen (PE), Polyphenylensulfid (PPS), Polyetherimid (PEI), Polyethersulfon (PES) sowie Thermoplaste aus der Gruppe der Polyaryletherketone (PAEK), wie z.B. LM-PAEK, Polyetheretherketon (PEEK) oder Polyetherketonketon (PEKK). Besonders bevorzugt sind das erste und/oder zweite FKV-Fügeteil jeweils ein Fügeteil zur Herstellung eines Bauteils für ein Flugzeugs, beispielsweise einer Steuerfläche für ein Flugzeug, insbesondere eines Querruders für ein Flugzeug. Das erste und/oder zweite Fügeteil können aber auch generell zur Herstellung eines Bauteils für die Luft- und Raumfahrt eingesetzt werden. Bei dem Bauteil für die Luft- und Raumfahrt kann es sich beispielsweise um ein Bauteil für ein Raumfahrzeug, einen Satelliten, eine Drohne oder andere ein anderes Flugobjekt handeln. Die FKV-Fügeteile können auch zur Herstellung eines Bauteils für die Automobilindustrie, insbesondere eines Bauteils für ein Kraftfahrzeug, eingesetzt werden. Für das Vorwärmen und das Verschweißen können das erste und/oder das zweite Fügeteil auf einer Auflage angeordnet werden. Die Auflage kann beispielsweise durch eine Oberfläche eines Tisches gebildet sein. Der Tisch kann gemäß einer Ausführungsform der Erfindung ein Förderband aufweisen, um die Fügeteile in eine Richtung zu fördern. Die Auflage kann zur besseren Fixierung der Fügeteile an eine Form des ersten und/oder zweiten Fügeteils angepasst sein. Nach dem Anordnen wird die Fügestelle des ersten und zweiten Fügeteils von der Ausgangstemperatur auf die Vorwärmtemperatur vorgewärmt, die unterhalb der Schweißtemperatur und näher an der Schweißtemperatur als an der Ausgangstemperatur liegt. Die Ausgangstemperatur der Fügestelle liegt bevorzugt zwischen 10 °C und 40°C, besonders bevorzugt bei im Wesentlichen 24 °C. Die Ausgangstemperatur ist die Temperatur der Fügestelle vor dem Vorwärmen und dem Verschweißen. Bei FKV-Fügeteilen, die teilkristalline Thermoplaste aufweisen, liegt die Vorwärmtemperatur an der Fügestelle vorzugsweise oberhalb der Rekristallisationstemperatur des Materials. Bei FKV-Fügeteilen, die amorphe Thermoplaste aufweisen, liegt die Vorwärmtemperatur bevorzugt oberhalb der Glasübergangstemperatur des verwendeten Materials. Bei FKV-Fügeteilen, die teilkristalline Thermoplaste aufweisen, liegt die Vorwärmtemperatur bevorzugt zwischen 90 °C und 350 °C. Bei FKV-Fügeteilen, die amorphe Thermoplaste aufweisen, liegt die Vorwärmtemperatur bevorzugt zwischen 175 °C und 320 °C. Durch das Vorwärmen wird Wärmeenergie in das erste und/oder zweite Fügeteil eingebracht, die sich in Abhängigkeit der Materialeigenschaften in dem ersten und/oder zweiten Fügeteil verteilt. Das Vorwärmen erfolgt mithilfe des ersten Induktors. Es können auch mehrere erste Induktoren zum Vorwärmen eingesetzt werden. Der erste Induktor kann zum Beispiel als Spule mit zumindest einer Windung, vorzugsweise mehreren Windungen, ausgebildet sein. Die Form des Induktors ist jedoch für die Erfindung nicht ausschlaggebend. Alternativ kann als Induktor daher auch zum Beispiel ein Linieninduktor, insbesondere ein Draht mit einem vorzugsweise geraden Drahtabschnitt, eingesetzt werden. Der erste Induktor wird derart angeordnet, dass das erzeugte elektromagnetische Feld des ersten Induktors in das erste und/oder zweite Fügeteil eindringen und elektrische Wirbelströme induzieren kann. Mit dem ersten Induktor wird ein elektromagnetisches Wechselfeld erzeugt, dessen Frequenz in Abhängigkeit des Materials des ersten und/oder zweiten Fügeteils so gewählt wird, dass zumindest in einer aus CF bestehenden elektrische Leiterschlaufe Wirbelströme induziert werden. Vorzugsweise wird mit dem ersten Induktor ein Wechselfeld für das Vorwärmen erzeugt, das eine konstante Amplitude der magnetischen Feldstärke und eine konstante Frequenz aufweist. Die Prozessparameter zum Vorwärmen, wie beispielsweise die Amplitude und Frequenz für das Wechselfeld und die Expositionsdauer, können zuvor empirisch bestimmt worden sein, um an der Fügestelle des ersten und/oder zweiten Fügeteils die Vorwärmtemperatur zu erreichen. Der erste Induktor kann relativ zu dem ersten und/oder zweiten Fügeteil, insbesondere relativ zu der Fügestelle, bewegt werden. Zu diesem Zweck kann das erste und/oder zweite Fügeteil bewegt werden, beispielsweise mit einem Förderband. Alternativ oder zusätzlich kann der erste Induktor bewegt werden, beispielsweise mithilfe eines Roboters. Auch die relative Geschwindigkeit des ersten Induktors zur Fügestelle kann ein Prozessparameter sein. Durch das Vorwärmen mithilfe des ersten Induktors wird das erste und/oder zweite Fügeteil an der Fügestelle auf eine Vorwärmtemperatur gebracht, die nicht einem exakt vorgegeben Wert entsprechen und auch nicht zeitlich und örtlich konstant sein muss. Die exakte Vorwärmtemperatur und deren Verteilung hängt von den Materialeigenschaften des ersten bzw. zweiten Fügeteils ab. Nachdem das erste und/oder zweite Fügeteil an der Fügestelle auf die Vorwärmtemperatur vorgewärmt wurde, wird vorzugsweise auf Basis einer Temperatur des ersten und/oder zweiten Fügeteils, insbesondere eines zeitlichen und/oder örtlichen Verlaufs der Temperatur, zumindest ein Prozessparameter ermittelt, der erforderlich ist, um die Fügestelle auf die vorgegebene Schweißtemperatur zu erwärmen. Der Prozessparameter kann auf Basis von lokalen und/oder zeitlichen Abweichungen oder Veränderungen der Temperatur ermittelt werden. Der Prozessparameter kann vorzugsweise auf Basis einer Abweichung der gemessenen Temperatur von einer Soll-Temperatur bestimmt werden. Bei der Temperatur kann es sich um die Vorwärmtemperatur selbst oder eine mit der Fügestelle in Verbindung stehende Oberflächentemperatur des ersten und/oder zweiten Fügeteils handeln. Zwischen der Oberflächentemperatur und der Temperatur an der Fügestelle kann beispielsweise mithilfe von mathematischen Modellen und Simulationen oder empirischen Daten ein Zusammenhang hergestellt werden. Beispielsweise können empirische Daten aus Versuchen mit Fügeteilen unterschiedlicher Geometrien und Dicken gewonnen werden. Auf diese Weise können Inhomogenitäten und andere Materialeigenschaften beim Verschweißen berücksichtigt und ausgeglichen werden. Ziel ist, Abweichungen in den Materialeigenschaften zu kompensieren, sodass alle Fügestellen auf die Schweißtemperatur erwärmt werden. Der Prozessparameter kann beispielsweise einen Induktionsgeneratoreinstellparameter für den ersten oder zweiten Induktor darstellen. Wenn beispielsweise an einer Stelle des ersten und/oder zweiten Fügeteils die Temperatur niedriger ist als an benachbarten Stellen, so kann beispielsweise die Amplitude eines vom ersten oder zweiten Induktor erzeugten elektromagnetischen Feldes zum Erwärmen der Fügestelle auf die Schweißtemperatur an dieser Stelle entsprechend erhöht werden. Zusätzlich oder alternativ kann an dieser Stelle beispielsweise die relative Bewegungsgeschwindigkeit des ersten oder zweiten Induktors und/oder der Abstand zwischen dem ersten oder zweiten Induktor zu dem ersten und/oder zweiten Fügeteil verringert werden. Bei dem Prozessparameter kann es sich beispielsweise um eine Amplitude einer magnetischen Feldstärke eines elektromagnetischen Feldes, eine Frequenz, eine Stromstärke, eine Expositionsdauer, einen Kopplungsabstand oder eine Bewegungsgeschwindigkeit des Induktors oder des ersten bzw. zweiten Fügeteils handeln. Durch den Prozessparameter kann die an der Fügestelle generierte Wärme beeinflusst, insbesondere erhöht oder verringert, werden. Es können auch mehrere Prozessparameter ermittelt werden. Durch Anwendung des zumindest einen Prozessparameters wird mit dem entsprechenden Induktor die Fügestelle des ersten und zweiten Fügeteils auf die Schweißtemperatur gebracht und dabei Abweichungen in den Materialeigenschaften kompensiert. Bei FKV-Fügeteilen, die teilkristalline Thermoplaste aufweisen, wird die Fügestelle vorzugsweise auf eine Schweißtemperatur gebracht, die zumindest 20°C über der Schmelztemperatur des Materials des jeweiligen Fügeteils liegt. Bei FKV-Fügeteilen, die amorphe Thermoplaste aufweisen, wird die Fügestelle vorzugsweise auf eine Schweißtemperatur gebracht, die zumindest 80°C über der Glasübergangstemperatur des Materials des jeweiligen Fügeteils liegt. Der erste und/oder zweite Induktor können während des Verfahrens von einem Roboter insbesondere entlang der Fügestelle bewegt werden. Der zweite Induktor ist ein vom ersten Induktor verschiedener Induktor, wobei "verschieden" in diesem Zusammenhang nicht bedeutet, dass die Induktoren nicht gleich oder gleichartig sein können. "Verschieden" bedeutet, dass es sich nicht um denselben Induktor handelt. Der erste und der zweite Induktor können demnach bei einer Ausführungsform der Erfindung gleich oder gleichartig ausgebildet sein.

Bei einer bevorzugten Ausführungsform der Erfindung ist vorgesehen, dass nach dem induktiven Vorwärmen der erste Induktor deaktiviert wird oder die Fügestelle aus einem Wirkungsbereich des ersten Induktors entfernt wird. Dadurch kann sich die durch das Vorwärmen eingebrachte Wärmeenergie in dem ersten und/oder zweiten Fügeteil verteilen. Der Wirkungsbereich des ersten Induktors ist jener Bereich, in dem das Wechselfeld des ersten Induktors zu einer Erwärmung der Fügestelle führt. Um die Fügestelle aus dem Wirkungsbereich zu entfernen, können entweder das erste und/oder zweite FKV-Fügeteil oder der erste Induktor bewegt werden.

Damit sich die eingebrachte Wärmeenergie nach dem Vorwärmen verteilen kann und die Materialeigenschaften erfasst werden können, ist es günstig, wenn zwischen einem Ende des induktiven Vorwärmens der Fügestelle und einem Beginn des induktiven Erwärmens der Fügestelle auf die Schweißtemperatur ein zeitlicher Abstand von zumindest 0,1 Sekunden liegt.

Um mehr Materialfehler und Inhomogenitäten in den Fügeteilen erkennen zu können, ist es günstig, wenn das Verhältnis der Differenz zwischen der Vorwärmtemperatur und der Schweißtemperatur zu der Differenz zwischen der Ausgangstemperatur und der Vorwärmtemperatur zumindest 1:1,5, vorzugsweise zumindest 1:2, zumindest 1:2,5 oder zumindest 1:3, insbesondere zumindest 1:3,5 oder zumindest 1:4, beträgt.

Eine besonders vorteilhafte Ausführungsform der Erfindung ergibt sich, wenn der zumindest eine Prozessparameter auf Basis einer Temperatur, insbesondere eines zeitlichen und/oder örtlichen Temperaturverlaufs, des vorgewärmten ersten und/oder zweiten Fügeteils und der vorgegebenen Schweißtemperatur ermittelt wird, wobei die Temperatur mit Hilfe einer Sensoreinrichtung gemessen wird. Bei der Temperatur kann es sich um eine Oberflächentemperatur des ersten und/oder zweiten Fügeteils handeln. Die erfasste Oberfläche kann dabei von der Fügestelle abweichen. Wie bereits erwähnt, hängt die Erwärmung der Fügeteile von deren Materialeigenschaften ab, darunter der Faserverstärkung, dem Faservolumengehalt und des spezifischen Widerstands der verwendeten Fasern. Wenn das erste und/oder zweite Fügeteil auf die Vorwärmtemperatur erwärmt wird, breitet sich die eingebrachte Wärmeenergie in alle Raumrichtungen des ersten und/oder zweiten Fügeteils aus. Da jedoch die Eigenschaften der Fügeteile lokal unterschiedlich ausgeprägt sein können, kann ein elektromagnetisches Feld zu lokal unterschiedlichen Erwärmungsverhalten und damit zu unterschiedlichen Vorwärmtemperaturen an den Fügestellen führen. Auf Basis der Temperaturen des ersten und/oder zweiten Fügeteils bzw. deren zeitlichen und/oder örtlichen Verläufen kann daher der zumindest eine Prozessparameter für eine entsprechende Fügestelle ermittelt werden. Der Prozessparameter kann vorzugsweise auf Basis einer Abweichung der gemessenen Temperatur von einer Soll-Temperatur bestimmt werden. Bei einer besonders bevorzugten Ausführungsform wird die Oberflächentemperatur des ersten und/oder zweiten Fügeteils gemessen und der zumindest eine Prozessparameter auf Basis einer Abweichung der gemessenen Oberflächentemperatur von einer Oberflächen-Solltemperatur bestimmt. Die Solltemperatur, insbesondere die Oberflächen-Solltemperatur, kann mithilfe mathematischer Berechnungen, Simulationen oder empirischer Daten aus der vorgegebenen Schweißtemperatur an der Fügestelle berechnet werden. Wenn der ermittelte Prozessparameter angewandt wird, wird die Oberfläche nach dem Vorwärmen mit dem ersten oder zweiten Induktor auf die Oberflächen-Solltemperatur erwärmt, sodass die Fügestelle die Schweißtemperatur aufweist. Dies führt bei einem Beispiel dazu, dass bei einer Abweichung der Materialeigenschaften, die zu einem schlechteren Erwärmungsverhalten führt, die Amplitude der magnetischen Feldstärke des elektromagnetischen Feldes für das induktive Erwärmen auf die Schweißtemperatur erhöht wird, die relative Bewegung des Induktors und/oder sein Abstand zum ersten und/oder zweiten Fügteil an der entsprechenden Stelle reduziert wird.

Bei einer besonders bevorzugten Ausführungsform der Erfindung ist vorgesehen, dass die Sensoreinrichtung durch einen optischen Temperatursensor, insbesondere eine Wärmebildkamera, gebildet ist. Mithilfe des optischen Temperatursensors, insbesondere der Wärmebildkamera, kann ein zeitlicher und/oder örtlicher Temperaturverlauf des ersten und/oder zweiten Fügeteils erfasst werden. Bei der Temperatur bzw. dem Temperaturverlauf kann es sich um eine Oberflächentemperatur bzw. einen Oberflächentemperaturverlauf handeln. Wenn die Wärmeenergie durch das erste und/oder zweite Fügeteil diffundiert, kann zum Beispiel mithilfe von mathematischen Modellen oder Simulationen auf die Vorwärmtemperatur an der Fügestelle geschlossen werden.

Eine besonders effiziente Ausgestaltung der Erfindung ergibt sich, wenn zum induktiven Erwärmen ein zweiter, vom ersten Induktor verschiedener Induktor verwendet wird und der erste und der zweite Induktor voneinander beabstandet entlang einer Verarbeitungsstrecke angeordnet sind. Auf diese Weise kann die Fügestelle vom ersten Induktor vorgewärmt werden, das erste und/oder zweite Fügeteil zum zweiten Induktor weiterbefördert und die Fügestelle dann vom zweiten Induktor auf die Schweißtemperatur erwärmt werden. Das Induktionsschweißverfahren wird entlang der Verarbeitungsstrecke ausgeführt. Die Verarbeitungsstrecke kann ein Förderband aufweisen. Es kann aber auch vorgesehen sein, dass ein oder mehrere Roboter das erste und/oder zweite Fügeteil vom ersten zum zweiten Induktor befördern. Es kann auch vorgesehen sein, dass ein oder mehrere Roboter den ersten und/oder zweiten Induktor zu der Fügestelle bewegen.

Besonders vorteilhaft ist, wenn die Sensoreinrichtung zwischen dem ersten und dem zweiten Induktor angeordnet ist. Auf diese Weise kann mit der Sensoreinrichtung nach dem Vorwärmen durch den ersten Induktor der zumindest eine Prozessparameter für den zweiten Induktor ermittelt und anschließend mit dem zweiten Induktor die Fügestelle auf die Schweißtemperatur erwärmt werden.

Die Konzentration der Wärmeverteilung auf die Fügestelle kann begünstigt werden, wenn vor, während und/oder nach dem Verschweißen des ersten mit dem zweiten Fügeteil das erste und/oder zweite Fügeteil vorzugsweise mit einem Fluidstrom, insbesondere einem Gasstrom, gekühlt wird. Es kann auch vorgesehen sein, dass das erste und/oder zweite Fügeteil vor, während und/oder nach dem Vorwärmen gekühlt wird. Es kann auch vorgesehen sein, dass das erste und/oder zweite Fügeteil vor, während und/oder nach dem Messen der Temperatur des ersten und/oder zweiten Fügeteils durch die Sensoreinrichtung gekühlt wird. Die Kühlung erfolgt bevorzugt mittels eines Fluids. Als Fluid für den Fluidstrom wird vorzugsweise Druckluft oder ein wasserbasiertes Aerosol verwendet. Das Fluid, insbesondere das Gas, kann mit einem Gebläse zur Fügestelle gebracht und vorzugsweise mit einer Düse zur Fügestelle gelenkt werden. Es kann ein konstanter Fluidstrom verwendet werden. Der Fluidstrom kann auch geregelt und/oder gesteuert werden. Zusätzlich oder alternativ kann vorgesehen sein, dass ein Gleitschuh zum Kühlen verwendet wird, oder die Kühlung durch eine insbesondere stationäre Kühlplatte erfolgt.

Um die stoffschlüssige Verbindung zwischen den Fügeteilen herzustellen, kann es vorteilhaft sein, wenn nach dem induktiven Erwärmen mit Hilfe des ersten oder zweiten Induktors auf die Schweißtemperatur ein Anpresselement, insbesondere eine Anpressrolle, das erste und das zweite Fügeteil aneinanderpresst. Das Anpresselement kann als Anpressrolle ausgebildet sein, die mit einem einstellbaren Anpressdruck auf das erste und/oder zweite Fügeteil drückt. Der an der Fügestelle resultierende Konsolidierungsdruck liegt vorzugsweise zwischen 1 bar und 100 bar.

Die Vorwärm- und Schweißtemperaturen sind von den verwendeten Materialien abhängig. Die Ausgangstemperatur kann in einem Bereich zwischen 10 °C und 40 °C liegen. Die Vorwärmtemperatur kann in einem Bereich zwischen 90 °C und 350 °C liegen, wenn das erste und/oder das zweite Fügeteil ein teilkristallines-thermoplastisches Material aufweist. Die Vorwärmtemperatur kann in einem Bereich zwischen 175 °C und 320 °C liegen, wenn das erste und/oder das zweite Fügeteil ein amorphes-thermoplastisches Material aufweist. Die Schweißtemperatur kann in einem Bereich zwischen 140 °C und 460 °C liegen, wenn das erste und/oder das zweite Fügeteil ein teilkristallines-thermoplastisches Material aufweist. Die Schweißtemperatur kann in einem Bereich zwischen 250 °C und 380 °C liegen, wenn das erste und/oder das zweite Fügeteil ein amorphes-thermoplastisches Material aufweist.

Bei beispielhaften Ausführungsformen werden für die nachfolgenden Materialien folgende Vorwärmtemperaturen und Schweißtemperaturen verwendet:
Faserverstärkte Kunststoffe mit einer Matrix aus:
Polyethylen (PE):

| | |
|---|---|
| Vorwärmtemperatur: | 90 °C - 130 °C |
| Schweißtemperatur: | 140 °C - 190 °C |

Polypropylen (PP):

| | |
|---|---|
| Vorwärmtemperatur: | 120 °C - 150 °C |
| Schweißtemperatur: | 180 °C - 210 °C |

Polyamid 6 (PA6):

| | |
|---|---|
| Vorwärmtemperatur: | 160 °C - 210 °C |
| Schweißtemperatur: | 240 °C - 290 °C |

Polyamid 6.6 (PA66):

| | |
|---|---|
| Vorwärmtemperatur: | 180 °C - 250 °C |
| Schweißtemperatur: | 280 °C - 320 °C |

Polyamid 12 (PA12):

| | |
|---|---|
| Vorwärmtemperatur: | 120 °C - 165 °C |
| Schweißtemperatur: | 200 °C - 250 °C |

Polyphenylensulfid (PPS):

| | |
|---|---|
| Vorwärmtemperatur: | 200 °C - 285 °C |
| Schweißtemperatur: | 310 °C - 370 °C |

Polyetherimid(PEI) :

| | |
|---|---|
| Vorwärmtemperatur: | 220 °C - 320 °C |
| Schweißtemperatur: | 300 °C - 380 °C |

Polyethersulfon (PES):

| | |
|---|---|
| Vorwärmtemperatur: | 220 °C - 320 °C |
| Schweißtemperatur: | 300 °C - 380 °C |

Low Melt Polyaryletherketone (LM-PAEK):

| | |
|---|---|
| Vorwärmtemperatur: | 210 °C - 300 °C |
| Schweißtemperatur: | 330 °C - 430 °C |

Polyetheretherketon (PEEK):

| | |
|---|---|
| Vorwärmtemperatur: | 235 °C - 330 °C |
| Schweißtemperatur: | 360 °C - 460 °C |

Polyetherketonketon (PEKK):

| | |
|---|---|
| Vorwärmtemperatur: | 200 °C - 350 °C |
| Schweißtemperatur: | 320 °C - 450 °C |

Die Ausgangstemperatur kann bei allen genannten Materialien zwischen 10 °C und 40 °C liegen.

Bei einer Ausführungsform der Erfindung sind das erste und/oder das zweite Fügeteil als Laminate ausgebildet und vorzugsweise übereinander angeordnet.

Die eingangs erwähnte Aufgabe wird auch durch eine Vorrichtung zum induktiven Schweißen nach Anspruch 13 gelöst. Die Vorrichtung weist erfindungsgemäß folgendes auf:
einen ersten Induktor zum induktiven Erwärmen eines ersten Fügeteils und/oder eines zweiten Fügeteils;
optional einen zweiten Induktor, der von dem ersten Induktor verschieden ist
eine Steuerungseinheit, die dazu eingerichtet ist, folgende Schritte auszuführen:
   - den ersten Induktor derart zu steuern und/oder regeln, dass der erste Induktor eine Fügestelle des ersten und zweiten Fügeteils von einer Ausgangstemperatur auf eine Vorwärmtemperatur unterhalb einer vorgegebenen Schweißtemperatur vorwärmt, wobei die Differenz zwischen der Vorwärmtemperatur und der Schweißtemperatur geringer ist als die Differenz zwischen der Ausgangstemperatur und der Vorwärmtemperatur;
   - Ermitteln zumindest eines Prozessparameters, insbesondere eines Induktionsgeneratoreinstellparameters, welcher erforderlich ist, um die vorgewärmte Fügestelle auf die Schweißtemperatur zu erwärmen; und
   - den ersten Induktor oder den optionalen zweiten Induktor derart zu steuern und/oder zu regeln, dass die Fügestelle auf die Schweißtemperatur unter Verwendung des zumindest einen Prozessparameters erwärmt wird, sodass das erste Fügeteil mit dem zweiten Fügeteil an der Fügestelle verschweißbar ist.

Die Vorrichtung zum induktiven Schweißen ist dazu ausgebildet, das oben beschriebene Induktionsschweißverfahren auszuführen. Die oben in Zusammenhang mit dem Induktionsschweißverfahren beschriebenen Vorteile und Merkmale sind auch auf die Vorrichtung zum induktiven Schweißen übertragbar. Die Vorrichtung kann eine Auflage, insbesondere einen Tisch aufweisen, auf welcher die Fügeteile angeordnet werden können. Der erste Induktor und der optionale zweite Induktor können bei einer Ausführungsform der Erfindung oberhalb der Auflage angeordnet sein. Die Auflage kann eine Fördereinrichtung, insbesondere ein Förderband aufweisen, um die Fügeteile relativ zu dem ersten Induktor und dem optionalen zweiten Induktor zu bewegen. Es kann auch zumindest ein Roboter vorgesehen sein, der die Fügeteile oder den bzw. die Induktoren bewegen kann. Der zweite Induktor ist ein vom ersten Induktor verschiedener Induktor, wobei "verschieden" in diesem Zusammenhang nicht bedeutet, dass die Induktoren nicht gleich oder gleichartig sein können. "Verschieden" bedeutet, dass es sich nicht um denselben Induktor handelt. Der erste und der zweite Induktor können demnach gleich oder gleichartig ausgebildet sein.

Um den zumindest einen Prozessparameter zu ermitteln, ist es günstig, wenn eine Sensoreinrichtung vorgesehen ist, die dazu eingerichtet ist, eine Temperatur, insbesondere einen zeitlichen Temperaturverlauf, des ersten und/oder zweiten Fügeteils zu erfassen. Die Sensoreinrichtung kann beispielsweise oberhalb der Auflage angeordnet sein. Mit der Sensoreinrichtung kann insbesondere eine Oberflächentemperatur des ersten und/oder zweiten Fügeteils erfasst werden.

Bevorzugt ist, wenn ein zweiter Induktor vorgesehen ist und die Sensoreinrichtung zwischen dem ersten und dem zweiten Induktor angeordnet ist. Die Fügestelle wird bei dieser Ausführungsform vom ersten Induktor vorgewärmt, anschließend wird die Temperatur der Fügestelle, insbesondere ein zeitlicher und/oder örtlicher Temperaturverlauf, von der Sensoreinrichtung, vorzugsweise einer Wärmebildkamera, erfasst und danach wird die Fügestelle von dem zweiten Induktor unter Anwendung des zumindest einen ermittelten Prozessparameters auf die Schweißtemperatur erwärmt.

Richtungsangaben in der vorliegenden Offenbarung beziehen sich auf den bestimmungsgemäßen Gebrauchszustand der Vorrichtung zum induktiven Verschweißen.

Im Folgenden wird die Erfindung anhand von Zeichnungen näher beschrieben, auf die sie jedoch nicht beschränkt sein soll. Es zeigen:
Fig. 1 eine schematische Darstellung einer Vorrichtung zum induktiven Verschweißen in einer seitlichen Ansicht;
Fig. 2A-C schematische Temperaturverläufe gemäß einer ersten Ausführungsform über eine Fügeteildicke zu unterschiedlichen Prozesszeitpunkten;
Fig. 3A-C schematische Temperaturverläufe gemäß einer zweiten Ausführungsform über eine Fügeteildicke zu unterschiedlichen Prozesszeitpunkten;
Fig. 4A-C schematische Temperaturverläufe gemäß einer dritten Ausführungsform über eine Fügeteildicke zu unterschiedlichen Prozesszeitpunkten; und
Fig. 5A-C schematische Temperaturverläufe gemäß einer ersten Ausführungsform über eine Fügeteildicke zu unterschiedlichen Prozesszeitpunkten;
Fig. 6 zeigt einen Temperaturverlauf bei einem Schweißverfahren aus dem Stand der Technik;
Fig. 7 zeigt einen Temperaturverlauf bei einem Schweißverfahren aus dem Stand der Technik; und
Fig. 8 zeigt einen Temperaturverlauf bei einem Schweißverfahren gemäß der Erfindung.

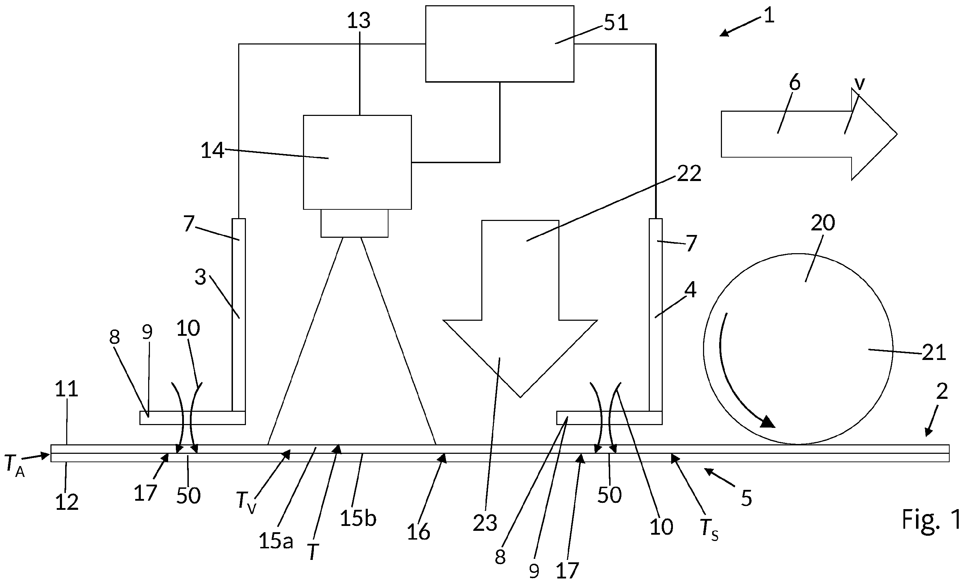

Fig. 1 zeigt eine Vorrichtung 1 zum induktiven Schweißen von Fügeteilen 11, 12 zu einem Bauteil 2, beispielsweise einem Bauteil 2 für ein Flugzeug (nicht gezeigt). Die Vorrichtung 1 weist einen ersten Induktor 3 und einen zweiten Induktor 4 auf, die entlang einer Verarbeitungsstrecke 5 in eine Prozessrichtung 6 gesehen voneinander beabstandet angeordnet sind. Es können auch mehrere erste 3 und/oder mehrere zweite Induktoren 4 vorgesehen sein. Der erste 3 und der zweite Induktor 4 sind in dem gezeigten Ausführungsbeispiel gleichartig ausgebildet. Die Induktoren 3, 4 weisen jeweils einen Stromzuführabschnitt 7 und einen Spulenabschnitt 8 mit zumindest einer Windung 9 auf. Der Spulenabschnitt 8 der Induktoren 3, 4 ist jeweils so ausgerichtet, dass ein vom jeweiligen Induktor 3, 4 erzeugtes elektromagnetisches Wechselfeld 10 in ein erstes Fügeteil 11 und ein zweites Fügeteil 12 eindringen und dort elektrische Wirbelströme 50 zum Erwärmen des ersten 11 und zweiten Fügeteils 12 erzeugen kann. In der gezeigten Darstellung sind die Induktoren 3, 4 oberhalb des ersten 11 und zweiten Fügeteils 12 angeordnet.

Zwischen dem ersten 3 und dem zweiten Induktor 4 ist in Fig. 1 eine Sensoreinrichtung 13 in Form einer Wärmebildkamera 14 angeordnet, die eine Temperatur T des ersten 11 und zweiten Fügeteils 12, insbesondere einen zeitlichen und/oder örtlichen Verlauf der Temperatur des ersten 11 und/oder zweiten Fügeteils 12, erfassen kann. Bei der Temperatur T bzw. dem Temperaturverlauf kann es sich um eine Oberflächentemperatur bzw. einen Oberflächentemperaturverlauf handeln. In dem gezeigten Ausführungsbeispiel ist die Wärmebildkamera 14 ebenfalls oberhalb des ersten 11 und zweiten Fügeteils 12 angeordnet und nach unten gerichtet. Die Sensoreinrichtung 13 und die Induktoren 3, 4 können mit einer Steuerungseinheit 51 verbunden sein.

In dem gezeigten Ausführungsbeispiel der Erfindung sind das erste 11 und das zweite Fügeteil 12 jeweils als flächiges Laminat 15a, 15b ausgebildet und übereinander angeordnet. Die Fügeteile 11, 12 können zu einem Bauteil 2, insbesondere einem Bauteil 2 für ein Flugzeug (nicht gezeigt), verschweißt werden. Mit der Vorrichtung 1 zum induktiven Schweißen können die beiden Fügeteile 11, 12 entlang eines Fügepfades 16, der auch als Fügenaht bezeichnet werden kann und sich aus kontinuierlich ineinander übergehenden Fügestellen 17 zusammensetzt und zwischen den Laminaten Fügeteilen 11, 12 liegt, miteinander verschweißt werden. Hierzu werden die Fügeteile 11, 12 auf einer Auflage (nicht gezeigt) platziert, die ein Förderband zur Förderung der Fügeteile 11, 12 in die Prozessrichtung 6 aufweisen kann (ebenfalls nicht gezeigt). Selbstverständlich ist es auch möglich, die Induktoren 3, 4 entlang der Fügeteile 11, 12 zu bewegen, während die Fügeteile 11,12 an Ort und Stelle verbleiben. Mit dem ersten Induktor 3 werden die Fügestellen 17 von einer Ausgangstemperatur T_{A}, die beispielsweise einer Raumtemperatur zwischen 10 °C und 40 °C, beispielsweise 24 °C, entsprechen kann, auf eine Vorwärmtemperatur T_{V} vorgewärmt. Die Vorwärmtemperatur T_{V} ist nicht als exakter Wert vorgegeben. Um die Fügestellen 17 auf die Vorwärmtemperatur T_{V} zu bringen, kann der erste Induktor 3 ein elektromagnetisches Wechselfeld 10 mit konstanter Amplitude der magnetischen Feldstärke und konstanter Frequenz erzeugen, das Wirbelströme 50 in den Fügeteilen 11, 12 induziert, während die Fügeteile 11,12 in Prozessrichtung 6 mit einer Relativgeschwindigkeit v unterhalb des ersten Induktors 3 vorbeigefördert werden. Die Werte für die Frequenz, Amplitude und Fördergeschwindigkeit v, die allesamt als Prozessparameter bezeichnet werden können, können für das Material der Fügeteile 11, 12 zuvor empirisch, mittels mathematischer Modelle oder Simulationen bestimmt worden sein, um die Fügestellen auf die Vorwärmtemperatur T_{V} zu bringen. Beispielsweise kann der erste Induktor 3 mit einer Frequenz zwischen 100 kHz und 1 MHz betrieben werden. Die Relativgeschwindigkeit zwischen dem ersten Induktor und dem Fügeteil kann zwischen 50 mm/min und 2000 mm/min betragen. Es werden die Prozessparameter derart gewählt, dass die Vorwärmtemperatur T_{V} unterhalb der Schweißtemperatur T_{S} liegt, aber die Differenz zwischen der Vorwärmtemperatur T_{V} und der Schweißtemperatur T_{S} geringer ist als die Differenz zwischen der Ausgangstemperatur T_{A} und der Vorwärmtemperatur T_{V}. Mit anderen Worten werden die Fügestellen der Fügeteile 11, 12 auf eine Vorwärmtemperatur T_{V} erwärmt, die näher an der Schweißtemperatur als an der Ausgangstemperatur T_{A} liegt.

Wie bereits erwähnt, entspricht die Vorwärmtemperatur T_{V} keinem vorgegeben Wert. Wichtig ist nur, dass der erste Induktor 3 die Fügestellen 17 auf eine Temperatur erwärmt, die näher an der Schweißtemperatur T_{S} liegt als an der Ausgangstemperatur T_{A}. Günstig ist, wenn das Verhältnis der Differenz zwischen der Vorwärmtemperatur T_{V} und der Schweißtemperatur T_{S} zu der Differenz zwischen der Ausgangstemperatur T_{A} und der Vorwärmtemperatur T_{V} zumindest 1:1,5, vorzugsweise zumindest 1:2, 1:2,5 oder 1:3, insbesondere zumindest 1:3,5 oder 1:4, beträgt. Bei Fügeteilen 11, 12, die teilkristalline Thermoplaste aufweisen, liegt die Vorwärmtemperatur T_{V} an der Fügestelle vorzugsweise oberhalb der Rekristallisationstemperatur des Materials. Bei Fügeteilen 11, 12, die amorphe Thermoplaste aufweisen, liegt die Vorwärmtemperatur T_{V} bevorzugt oberhalb der Glasübergangstemperatur des verwendeten Materials.

Wenn die Fügeteile 11, 12 erwärmt wurden, breitet sich die eingebrachte Wärmeenergie in alle Raumrichtungen in den Fügeteilen 11, 12 aus. Da jedoch die Eigenschaften (Faservolumengehalt, spezifischer Widerstand etc.) der Fügeteile 11, 12 beispielsweise aufgrund von Inhomogenitäten oder kleinen Materialfehlern lokal unterschiedlich ausgeprägt sein können, kann dies zu lokal unterschiedlichen Erwärmungsverhalten und damit zu unterschiedlichen Vorwärmtemperaturen T_{V} an unterschiedlichen Stellen der Fügeteile 11, 12 führen.

Die lokal unterschiedlichen Erwärmungsverhalten können, wenn dem nicht entgegengewirkt wird, auch zu lokal unterschiedlichen Temperaturen beim Verschweißen führen, sodass die Schweißqualität variiert. Ziel ist es jedoch, die Fügestellen 17 auf die gleiche Schweißtemperatur T_{S} zu bringen, um so eine gleichbleibende Schweißqualität zu erzielen. Die lokal unterschiedlichen Erwärmungsverhalten sollen beim Verschweißen daher ausgeglichen werden. Zu diesem Zweck wird zumindest ein Prozessparameter für jede Schweißstelle 17 ermittelt, welcher erforderlich ist, um die vorgewärmte Fügestelle 17 des ersten 11 und zweiten Fügeteils 12 mit dem zweiten Induktor 4 auf die vorgegebene Schweißtemperatur T_{S} zu erwärmen. Fügestellen 17 mit einem schlechteren Erwärmungsverhalten werden dadurch verhältnismäßig mit einer höheren Feldstärke erwärmt als Fügestellen 17 mit einem besseren Erwärmungsverhalten. Durch die Erwärmung auf die vergleichsweise hohe Vorwärmtemperatur T_{V} können dabei auch Abweichungen in den Materialeigenschaften und Inhomogenitäten berücksichtigt werden, die erst bei höheren Temperaturen auftreten bzw. sichtbar sind oder tiefer in einem Fügeteil 11, 12 liegen.

Um den zumindest einen Prozessparameter zu ermitteln, ist zwischen dem ersten 3 und dem zweiten Induktor 4 die Sensoreinrichtung 13 vorgesehen, die im gezeigten Beispiel als Wärmebildkamera 14 ausgebildet ist. Die Sensoreinrichtung 13 ist, wie die Induktoren 3, 4, oberhalb der Fügeteile 11, 12 angeordnet. Die Sensoreinrichtung 13 ist dazu ausgebildet, die Temperatur T, insbesondere einen zeitlichen und/oder örtlichen Verlauf der Oberflächentemperatur der Fügeteile 11, 12 zu erfassen. Mit der Sensoreinrichtung 13 können Abweichungen in den Materialeigenschaften, die zu unterschiedlichen Erwärmungsverhalten führen, erfasst und zumindest ein Prozessparameter für den zweiten Induktor 4 ermittelt werden, mit dem ein abweichendes Erwärmungsverhalten ausgeglichen und eine jeweilige Fügestelle 17 auf die Schweißtemperatur T_{S} gebracht werden kann. Bei einem besonders bevorzugten Ausführungsform wird die Oberflächentemperatur des ersten 11 und/oder zweiten Fügeteils 12 gemessen und der zumindest eine Prozessparameter auf Basis einer Abweichung der gemessenen Oberflächentemperatur von einer Oberflächen-Solltemperatur bestimmt. Die Oberflächen-Solltemperatur kann mithilfe mathematischer Berechnungen, Simulationen oder empirischer Daten aus der vorgegebenen Schweißtemperatur T_{S} an der Fügestelle berechnet werden. Für jede Fügestelle 17 kann jeweils zumindest ein Prozessparameter bestimmt werden. Der Prozessparameter kann beispielsweise eine Amplitude einer magnetischen Feldstärke, eine Frequenz, ein Abstand zwischen dem zweiten Induktor 4 und der Fügestelle 17 oder eine Relativgeschwindigkeit zwischen dem zweiten Induktor 4 und der Fügestelle sein. Selbstverständlich können auch mehrere Prozessparameter auf Basis der Vorwärmtemperatur T_{V} bestimmt werden. Es kann auch vorgesehen sein, dass nur ein oder mehrere Prozessparameter - z.B. die Amplitude der magnetischen Feldstärke und die Frequenz - ermittelt werden, während die anderen Prozessparameter - z.B. die Relativgeschwindigkeit und der Abstand des zweiten Induktors 4 zur Fügestelle 17 - feststehen. Wenn beispielsweise an einer Stelle ein abweichendes Erwärmungsverhalten vorliegt, kann beispielsweise die Amplitude der magnetischen Feldstärke für diese Stelle entsprechend angepasst, d.h. reduziert oder erhöht, werden. Mittels Simulationen, mathematischen Modellen oder empirischen Daten kann ein Prozessparameter gewählt werden, der zu einer Schweißtemperatur T_{S} an der Fügestelle 17 führt.

Nach dem Vorwärmen und dem Ermitteln des zumindest einen Prozessparameters werden die Fügestellen 17 entlang des Fügepfades 16 unter Verwendung des jeweils zuvor für die Fügestellen 17 ermittelten zumindest einen Prozessparameters auf die Schweißtemperatur T_{S} erwärmt. Die Schweißtemperatur T_{S} wird vorgegeben und ist vom Material der Fügeteile 11, 12 abhängig. Bei Fügeteilen 11, 12, die teilkristalline-thermoplastische Materialien aufweisen, kann beispielsweise eine Schweißtemperatur T_{S} von 400 °C vorgegeben werden. Bei der Erwärmung auf die Schweißtemperatur T_{S} werden die Fügeteile 11, 12 soweit erwärmt, dass das Material an den Fügestellen 17 in einen viskosen Zustand übergeht, sodass eine stoffschlüssige Verbindung zwischen den Fügeteilen 11, 12 hergestellt werden kann.

Um die Fügeteile 11, 12 zu verbinden, ist in der gezeigten Darstellung in Prozessrichtung 6 gesehen nach dem zweiten Induktor 4 ein Anpresselement 20 in Form einer drehbar gelagerten Anpressrolle 21 angeordnet, die einen Anpressdruck bzw. Konsolidierungsdruck auf die Fügeteile 11, 12 an den Fügestellen 17 aufbringen kann, um die stoffschlüssige Verbindung der Fügeteile 11, 12 zu begünstigen.

Um eine die Wärmeverteilung innerhalb der Fügeteile 11, 12 zu begünstigen und die Wärmeenergie insbesondere auf die Fügestellen 17 zu konzentrieren, kann die Vorrichtung 1 eine Kühleinrichtung 22 aufweisen. Die Kühleinrichtung 22 kann dazu eingerichtet sein, die Fügeteile 11, 12 vor, während und/oder nach dem Vorwärmen oberflächlich zu kühlen. Weiters kann die Kühleinrichtung 22 dazu eingerichtet sein, die Fügeteile 11, 12 oberflächlich zu kühlen, bevor, während und/oder nachdem die Temperatur T mit der Sensoreinrichtung 13 erfasst wird. Weiters kann die Kühleinrichtung 22 dazu eingerichtet sein, die Fügeteile 11, 12 vor, während und/oder nach dem Erwärmen der Fügeteile 11,12 auf die Schweißtemperatur T_{S} oberflächlich zu kühlen. Mit der Kühleinrichtung 22 kann beispielsweise ein Gas 23, insbesondere Luft, von oben auf die Fügeteile 11, 12 geleitet werden. Zusätzlich oder alternativ kann mit der Kühleinrichtung die Wärme mittels Wärmeleitung in Form eines Kühlkörpers aus den Laminaten abtransportiert werden.

In der gezeigten Darstellung sind die Fügeteile 11, 12 FKV-Fügeteile und bestehen zumindest teilweise aus teilkristallinen-thermoplastischen Material, insbesondere einem CFK. Die Vorwärmtemperatur T_{V} liegt in dem Ausführungsbeispiel 20°C-60°C unterhalb der Schmelztemperatur T_{M} des Materials, die bei 310 °C liegt. Die Schweißtemperatur liegt 40°C-120°C oberhalb der Schmelztemperatur T_{M}.

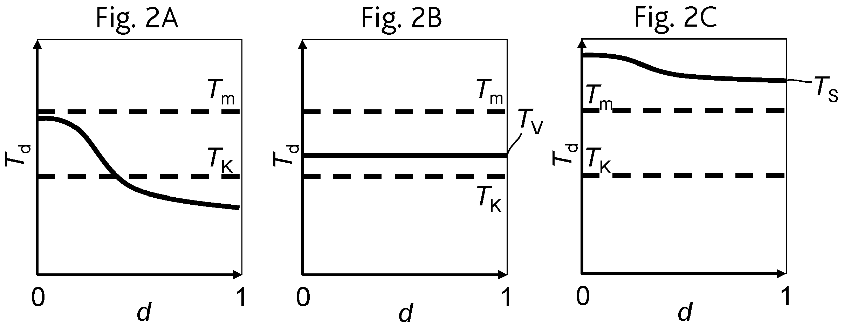

Fig. 2A-C, Fig. 3A-C, Fig. 4A-C und Fig. 5A-C zeigen schematische Temperaturverläufe entlang des Querschnitts des oberen Laminats 15a (erstes Fügeteil 11) in jeweils drei Diagrammen (mit den Buchstaben A, B und C bezeichnet) zu unterschiedlichen Zeitpunkten während des Induktionsschweißverfahrens. Drei Diagramme A, B und C stellen eine Diagrammgruppe dar. Auf der Abszisse ist die normierte Dicke d des oberen Laminats 15a, bezogen auf die maximale Dicke des oberen Laminats 15a, dargestellt. Die Position "0" entspricht der den Induktoren 3, 4 zugewandten Oberseite des oberen Laminats 15a. Die Position "1" bezeichnet die Unterseite des oberen Laminats 15a und ist dem unteren Laminat 15b (zweites Fügeteil 12) und damit den Fügestellen 17 des Fügepfads 16 zugewandt. Auf der Ordinate ist die Temperatur T_{d} aufgetragen, die die Temperatur an jeder Dickenposition im oberen Laminat 15a darstellt.

Die Diagrammgruppen Fig. 2A-C, Fig. 3A-C, Fig. 4A-C und Fig. 5A-C betreffen unterschiedliche Ausführungen der Vorrichtung 1, die sich dadurch unterscheiden, dass die Fügeteile 11, 12 an unterschiedlichen Stellen der Vorrichtung 1 durch die Kühleinrichtung 22 gekühlt werden. Diagramme mit gleichen Buchstaben A, B und C entsprechen gleichen Zeitpunkten während des Induktionsschweißverfahrens.

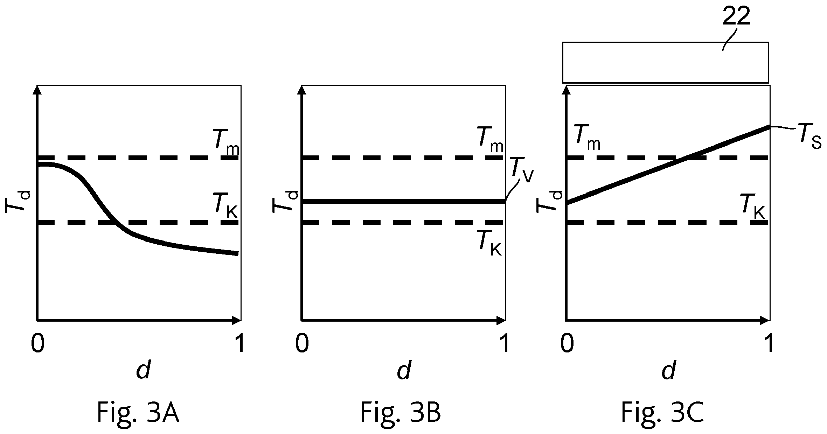

Fig. 2A-C zeigt eine Diagrammgruppe, bei der keine Kühlung durch die Kühleinrichtung 22 stattfindet. In Fig. 2A ist erkennbar, dass die Temperatur T_{d} während des Vorwärmens an der Oberseite des oberen Laminats 15a knapp unter der Schmelztemperatur T_{M} des Materials liegt. Nachdem die Fügestelle 17 aus einem Wirkungsbereich des ersten Induktors 3 befördert wurde, verteilt sich die eingebrachte Wärmeenergie, sodass sich über die Dicke d des oberen Laminats 15a eine im Wesentlichen konstante Temperatur T_{d} einstellt (siehe Fig. 2B), die ca. 20°C - 100°C unterhalb der Schmelztemperatur T_{M} liegt. Die Vorwärmtemperatur T_{V} an der Fügestelle 17, die sich an der Unterseite des oberen Laminats 15a befindet, entspricht in Fig. 2B der Temperatur T_{d} an der Oberseite des Laminats 15a. Mithilfe des zweiten Induktors 4 wird die Fügestelle 17 mit dem Prozessparameter anschließend auf die Schweißtemperatur T_{S} erwärmt, die für teilkristalline-thermoplastische Materialien meist ca. 40°C - 100°C oberhalb der Schmelztemperatur T_{M} des Materials liegt. Fig. 2C zeigt die Temperatur T_{d} zu Beginn des Erwärmens der Fügestelle 17 auf die Schweißtemperatur T_{S}. Nach einiger Zeit (nicht dargestellt) hat die eingebrachte Wärmeenergie das Fügeteil 11 durchdrungen und die Fügestelle 17 auf die Schweißtemperatur T_{S} gebracht. Vorteilhaft ist jedoch eine Kühlung des Fügeteils 11, um die Temperatur T_{d} an der Oberseite nicht zu hoch ansteigen zu lassen, wie in Fig. 3A-5C veranschaulicht ist.

Fig. 3A-C zeigt eine Diagrammgruppe, bei der im Bereich des zweiten Induktors 4 eine Kühlung durch die Kühleinrichtung 22 während des Erwärmens auf die Schweißtemperatur T_{S} stattfindet. Die Temperaturverläufe der Fig. 3A und Fig. 3B entsprechen jenen der Fig. 2A und Fig. 2B. In Fig. 3C ist jedoch erkennbar, dass die Oberseite des oberen Laminats 15a eine geringere Temperatur T_{d} aufweist als die Unterseite des oberen Laminats 15a, an der die Fügestelle 17 liegt. Im Bereich der Fügestelle 17 weist das Laminat 15 die Schweißtemperatur T_{S} auf. Durch die Kühlung kann ein Aufschmelzen der Oberseite des Laminats 15a verhindert und die Wärmeenergie auf die Fügestelle 17 an der Unterseite des Laminats 15a konzentriert werden.

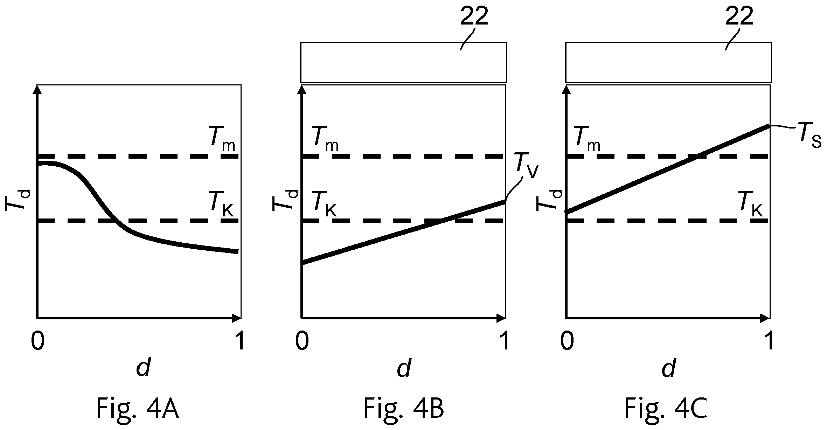

Fig. 4A-C zeigt eine Diagrammgruppe, bei der im Bereich zwischen dem ersten 3 und dem zweiten Induktor 4 nach dem Vorwärmen und im Bereich des zweiten Induktors 4 während des Erwärmens auf die Schweißtemperatur T_{S} eine Kühlung durch die Kühleinrichtung 22 stattfindet. Der Temperaturverlauf von Fig. 4A entspricht den Verläufen der Figuren Fig. 2A und Fig. 3A. In Fig. 4B ist erkennbar, dass die Temperatur T_{d}, nachdem die Fügestelle 17 aus dem Wirkungsbereich des ersten Induktors 3 befördert wurde, durch die Kühlung an der Oberseite des oberen Laminats 15a unter die Rekristallisationstemperatur T_{K} herabgesetzt ist. An der Unterseite, der Seite der Fügestelle 17, weist das Laminat 15 eine Vorwärmtemperatur T_{V} auf, die ca. 20°C - 60°C unterhalb der Schmelztemperatur T_{M} und oberhalb der Rekristallisationstemperatur T_{K} liegt. Fig. 4C zeigt, dass das Laminat 15a an der Unterseite mit der Fügestelle 17 die Schweißtemperatur T_{S} aufweist, während die Oberseite kühler ist. Durch die Kühlung kann ein Aufschmelzen der Oberseite des oberen Laminats 15a verhindert und die Wärmeenergie auf die Fügestellen 17 konzentriert werden.

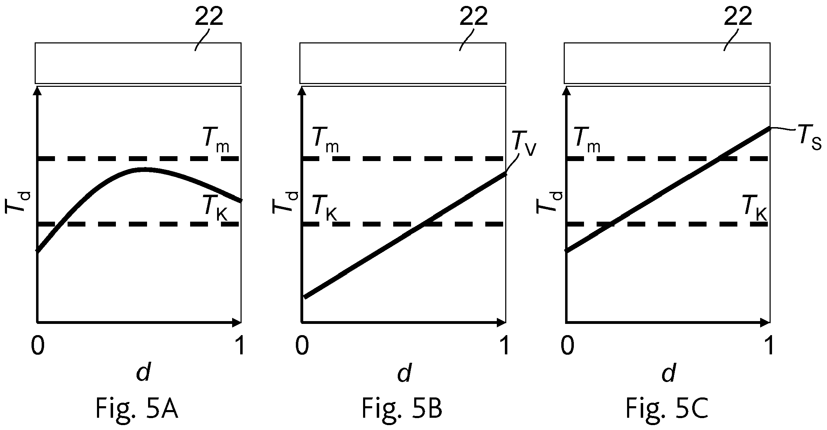

Fig. 5A-C zeigt eine Diagrammgruppe, bei der im Bereich des ersten Induktors 3 während des Vorwärmens, im Bereich zwischen dem ersten 3 und dem zweiten Induktor 4 nach dem Vorwärmen und im Bereich des zweiten Induktors 4 während des Erwärmens auf die Schweißtemperatur T_{S} eine Kühlung durch die Kühleinrichtung 22 stattfindet. Durch die Kühlung ist die Temperatur T_{d} an der Oberseite des oberen Laminats 15a während (siehe Fig. 5A) und nach dem Vorwärmen (Fig. 5B) herabgesetzt. Beim Erwärmen der Fügestelle 17 auf die Schweißtemperatur T_{S} ist durch die Kühlung des oberen Laminats 15a die Temperatur T_{d} an der Oberseite unter die Rekristallisationstemperatur T_{K} herabgesetzt. An der der Fügestelle 17 zugewandten Unterseite des Laminats 15a liegt die Schweißtemperatur T_{S} vor.

Aus den Fig. 2A-5C geht hervor, kann durch das erfindungsgemäße Verfahren, insbesondere in Kombination mit einer Kühleinrichtung 22, ein definiertes Temperaturprofil an der Fügestelle 17 erzeugt werden.

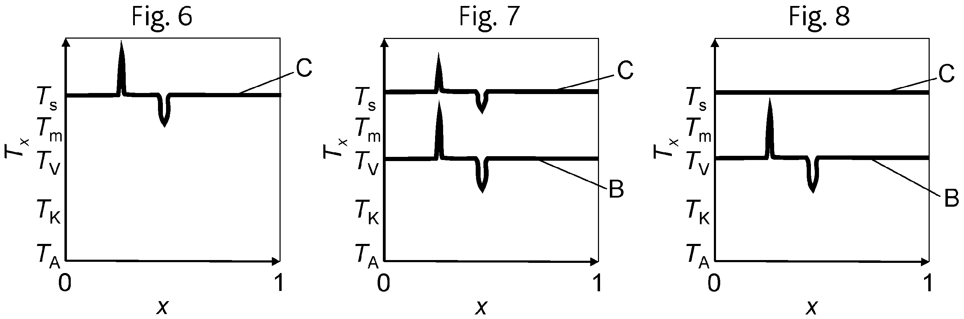

Fig. 6, Fig. 7 und Fig. 8 zeigen örtliche Temperaturverläufe *T*ₓ des Fügepfades 16 entlang der Prozessrichtung 6. Hierbei steht x für den relativ zurückgelegten Weg in Prozessrichtung. Zu Beginn des Fügepfades 16 weist x den Wert 0 und am Ende des Fügepfades 16 den Wert 1 auf. "B" bezeichnet eine Erwärmung auf die Vorwärmtemperatur T_{V}. "C" bezeichnet eine Erwärmung auf die Schweißtemperatur T_{S}.

Fig. 6 zeigt eine Erwärmung C auf Schweißtemperatur T_{S} mittels eines Induktors ohne Vorwärmung durch einen weiteren Induktor, wie es aus dem Stand der Technik bekannt ist. Es findet demnach im Unterschied zur Erfindung nur ein Erwärmungsvorgang statt, mittels dem die Schweißtemperatur T_{S} an der Fügestelle 17 erreicht werden soll. Aufgrund von lokalen Inhomogenitäten und Imperfektionen in einem ersten 11 und einem zweiten Fügeteil 12 kommt es zu Abweichungen der Schweißtemperatur T_{S}. Diese Abweichungen bewirken eine geringe Schweißqualität.

Fig. 7 zeigt eine Erwärmung B, bei der mittels eines ersten Induktors 3 der Fügepfad 16 auf eine Vorwärmtemperatur Tᵥ gebracht wurde, und eine anschließende Erwärmung C mittels eines zweiten Induktors 4, bei der der Fügepfad 16 ohne Berücksichtigung der sich einstellenden Verteilung der Vorwärmtemperatur T_{V} auf Schweißtemperatur gebracht wurde. Sowohl der erste 3 als auch der zweite Induktor 4 werden mit jeweils unterschiedlichen, jedoch konstanten Prozessparametern betrieben. Die im Material befindlichen lokalen Inhomogenitäten und Imperfektionen zeigen sich in Fig. 7 im Temperaturverlauf der Erwärmung B analog zum Temperaturverlauf C in Fig. 6. Da in Fig. 7 keine angepasste Erwärmung C basierend auf der vorherigen Erwärmung B erfolgt, bewirken die lokalen Inhomogenitäten und Imperfektionen eine auch eine Abweichung von der Schweißtemperatur T_{S} nach der Erwärmung C.

In Fig. 8, die das erfindungsgemäße Verfahren veranschaulicht, zeigen sich in der Erwärmung B ebenfalls die lokalen Inhomogenitäten und Imperfektionen entlang des Fügepfades 16. Allerdings erfolgt hier eine Anpassung der Erwärmung C basierend auf dem Temperaturverlauf der Erwärmung B durch Ermittlung bzw. Anpassung eines Prozessparameters, sodass durchgehend die Schweißtemperatur Tₛ entlang des Fügepfades 16 erreicht wird. Hierdurch kann eine sehr gute Schweißqualität erzielt werden.

## Patentansprüche

1. Induktionsschweißverfahren zum Fügen von Fügeteilen (11, 12), vorzugsweise von Faser-Kunststoff-Verbund-(FKV)-Fügeteilen, insbesondere von FKV-Fügeteilen für ein Bauteil (2) eines Flugzeugs, mit den folgenden Schritten:
Anordnen eines ersten Fügeteils (11) und eines zweiten Fügeteils (12);
Induktives Vorwärmen einer Fügestelle (17) des ersten (11) und des zweiten Fügeteils (12) von einer Ausgangstemperatur (T_{A}) auf eine Vorwärmtemperatur (T_{V}) unterhalb einer vorgegebenen Schweißtemperatur (T_{S}) mit Hilfe eines ersten Induktors (3), wobei die Differenz zwischen der Vorwärmtemperatur (T_{V}) und der Schweißtemperatur (T_{S}) geringer ist als die Differenz zwischen der Ausgangstemperatur (T_{A}) und der Vorwärmtemperatur (T_{V});
Ermitteln zumindest eines Prozessparameters, insbesondere eines Induktionsgeneratoreinstellparameters, welcher erforderlich ist, um die vorgewärmte Fügestelle (17) des ersten (11) und zweiten Fügeteils (12) auf die Schweißtemperatur (T_{S}) zu erwärmen;
Induktives Erwärmen der Fügestelle (17) des ersten (11) und zweiten Fügeteils (12) auf die Schweißtemperatur (T_{S}) unter Verwendung des zumindest einen Prozessparameters mit Hilfe des ersten Induktors (3) oder mit Hilfe eines von dem ersten Induktor verschiedenen zweiten Induktors (4); und
Verschweißen des ersten Fügeteils (3) mit dem zweiten Fügeteil (4) an der Fügestelle (17).

2. Induktionsschweißverfahren nach Anspruch 1, **dadurch gekennzeichnet, dass** nach dem induktiven Vorwärmen der erste Induktor (3) deaktiviert wird oder die Fügestelle (17) aus einem Wirkungsbereich des ersten Induktors (3) entfernt wird.

3. Induktionsschweißverfahren nach Anspruch 1 oder 2, **dadurch gekennzeichnet, dass** zwischen einem Ende des induktiven Vorwärmens der Fügestelle (17) mit dem ersten Induktor (3) und einem Beginn des induktiven Erwärmens der Fügestelle (17) auf die Schweißtemperatur (T_{S}) ein zeitlicher Abstand von zumindest 0,1 Sekunden liegt.

4. Induktionsschweißverfahren nach einem der Ansprüche 1 bis 3, **dadurch gekennzeichnet, dass** das Verhältnis der Differenz zwischen der Vorwärmtemperatur (T_{V}) und der Schweißtemperatur (T_{S}) zu der Differenz zwischen der Ausgangstemperatur (T_{A}) und der Vorwärmtemperatur (T_{V}) zumindest 1:1,5, vorzugsweise zumindest 1:2, zumindest 1:2,5 oder zumindest 1:3, insbesondere zumindest 1:3,5 oder zumindest 1:4, beträgt.

5. Induktionsschweißverfahren nach einem der Ansprüche 1 bis 4, **dadurch gekennzeichnet, dass** der zumindest eine Prozessparameter auf Basis einer Temperatur T, insbesondere eines zeitlichen und/oder örtlichen Temperaturverlaufs, des vorgewärmten ersten (11) und/oder zweiten Fügeteils (12) und der vorgegebenen Schweißtemperatur (T_{S}) ermittelt wird, wobei die Temperatur T mit Hilfe einer Sensoreinrichtung (13) gemessen wird.

6. Induktionsschweißverfahren nach Anspruch 5, **dadurch gekennzeichnet, dass** die Sensoreinrichtung (13) durch einen optischen Temperatursensor, insbesondere eine Wärmebildkamera (14), gebildet ist.

7. Induktionsschweißverfahren nach einem der Ansprüche 1 bis 6, **dadurch gekennzeichnet, dass** zum induktiven Erwärmen ein zweiter, vom ersten Induktor (3) verschiedener Induktor (4) verwendet wird und der erste (3) und der zweite Induktor (4) voneinander beabstandet entlang einer Verarbeitungsstrecke (5) angeordnet sind.

8. Induktionsschweißverfahren nach Anspruch 7 und Anspruch 5 oder 6, **dadurch gekennzeichnet, dass** die Sensoreinrichtung (13) zwischen dem ersten (3) und dem zweiten Induktor (4) angeordnet ist.

9. Induktionsschweißverfahren nach einem der Ansprüche 1 bis 8, **dadurch gekennzeichnet, dass** vor, während und/oder nach dem Verschweißen des ersten (11) mit dem zweiten Fügeteil (12) das erste (11) und/oder zweite Fügeteil (12) vorzugsweise mit einem Fluidstrom, insbesondere einem Gasstrom, gekühlt wird.

10. Induktionsschweißverfahren nach einem der Ansprüche 1 bis 9, **dadurch gekennzeichnet, dass** nach dem induktiven Erwärmen mit Hilfe des ersten (3) oder zweiten Induktors (4) auf die Schweißtemperatur (T_{S}) ein Anpresselement (20), insbesondere eine Anpressrolle (21), das erste (11) und das zweite Fügeteil (12) aneinander presst.

11. Induktionsschweißverfahren nach einem der Ansprüche 1 bis 10, **dadurch gekennzeichnet, dass**
- die Ausgangstemperatur (T_{A}) in einem Bereich zwischen 10 °C und 40 °C liegt; und
- die Vorwärmtemperatur (T_{V}) in einem Bereich zwischen 90 °C und 350 °C liegt, wenn das erste (11) und/oder das zweite Fügeteil (12) ein teilkristallines-thermoplastisches Material aufweist, oder in einem Bereich zwischen 175 °C und 320 °C liegt, wenn das erste (11) und/oder das zweite Fügeteil (12) ein amorphes-thermoplastisches Material aufweist; und
- die Schweißtemperatur (T_{S}) in einem Bereich zwischen 140 °C und 460 °C liegt, wenn das erste (11) und/oder das zweite Fügeteil (12) eine teilkristallines-thermoplastisches Material aufweist, oder in einem Bereich zwischen 250 °C und 380 °C liegt, wenn das erste (11) und/oder das zweite Fügeteil (12) ein amorphes-thermoplastisches Material aufweist.

12. Induktionsschweißverfahren nach einem der Ansprüche 1 bis 11, **dadurch gekennzeichnet, dass** das erste (11) und/oder das zweite Fügeteil (12) als Laminate (15) ausgebildet sind, die vorzugsweise übereinander angeordnet sind.

13. Vorrichtung (1) zum induktiven Schweißen von Fügeteilen (11, 12), vorzugsweise von Faser-Kunststoff-Verbund-(FKV)-Fügeteilen, insbesondere von FKV-Fügeteilen für ein Bauteil (2) eines Flugzeugs, aufweisend:
einen ersten Induktor (3) zum induktiven Erwärmen eines ersten Fügeteils (11) und/oder eines zweiten Fügeteils (12);
optional einen zweiten Induktor (4), der von dem ersten Induktor (3) verschieden ist;
eine Steuerungseinheit (51), die dazu eingerichtet ist, folgende Schritte auszuführen:
- den ersten Induktor (3) derart zu steuern und/oder regeln, dass der erste Induktor (3) eine Fügestelle (17) des ersten (11) und zweiten Fügeteils (12) von einer Ausgangstemperatur (T_{A}) auf eine Vorwärmtemperatur (T_{V}) unterhalb einer vorgegebenen Schweißtemperatur (T_{S}) vorwärmt, wobei die Differenz zwischen der Vorwärmtemperatur (T_{V}) und der Schweißtemperatur (T_{S}) geringer ist als die Differenz zwischen der Ausgangstemperatur (T_{A}) und der Vorwärmtemperatur (T_{V});
- Ermitteln zumindest eines Prozessparameters, insbesondere eines Induktionsgeneratoreinstellparameters, welcher erforderlich ist, um die vorgewärmte Fügestelle (17) auf die Schweißtemperatur (T_{S}) zu erwärmen; und
- den ersten Induktor (3) oder den optionalen zweiten Induktor (4) derart zu steuern und/oder zu regeln, dass die Fügestelle (17) auf die Schweißtemperatur (T_{S}) unter Verwendung des zumindest einen Prozessparameters erwärmt wird, sodass das erste Fügeteil (11) mit dem zweiten Fügeteil (12) an der Fügestelle (17) verschweißbar ist.

14. Vorrichtung (1) nach Anspruch 13, **dadurch gekennzeichnet, dass** eine Sensoreinrichtung vorgesehen ist, die dazu eingerichtet ist, eine Temperatur, insbesondere einen zeitlichen Temperaturverlauf, des ersten (11) und/oder zweiten Fügeteils (12) zu erfassen.

15. Vorrichtung nach Anspruch 14, **dadurch gekennzeichnet, dass** ein zweiter Induktor (4) vorgesehen ist und die Sensoreinrichtung (13) zwischen dem ersten (3) und dem zweiten Induktor (4) angeordnet ist.
